# EUROPÄISCHE PATENTSCHRIFT

(11) **EP 3 029 851 B1**
(45) Veröffentlichungstag und Bekanntmachung des Hinweises auf die Patenterteilung: **13.12.2017**
(21) Anmeldenummer: 15189049.8
(22) Anmeldetag: 09.10.2015
(51) Int. Cl.: H04B 7/08

(54) **VERFAHREN UND VORRICHTUNG ZUM BESTIMMEN EINES OPTIMALEN EMPFANGSSIGNALS VON EINEM MEHRANTENNENSYSTEM BEI EINEM FM-GLEICHKANALEMPFANG FÜR EINE EMPFANGSFREQUENZ**
METHOD AND DEVICE FOR DETERMINING AN OPTIMAL RECEIVED SIGNAL OF A MULTI-ANTENNA SYSTEM FOR A FM-EQUIVALENT CHANNEL RECEPTION FOR A RECEIVING FREQUENCY
PROCEDE ET DISPOSITIF DE DETERMINATION D'UN SIGNAL DE RECEPTION OPTIMAL D'UN SYSTEME MULTI-ANTENNES LORS D'UNE RECEPTION DE CANAL COMMUN FM POUR UNE FREQUENCE DE RECEPTION

(30) Priorität: 05.12.2014 DE 102014224953
(43) Veröffentlichungstag der Anmeldung: 08.06.2016
(73) Patentinhaber: ROBERT BOSCH GMBH, 70442 Stuttgart (DE)
(72) Erfinder: Tran, Manh-Thang, 31139 Hildesheim (DE); Nyenhuis, Detlev, 31079 Sibbesse (DE); Risse, Marcus, 31139 Hildesheim (DE)

(56) Entgegenhaltungen:
- EP-A2- 1 619 804
- US-A- 6 141 536

## Beschreibung

### Stand der Technik

Die vorliegende Erfindung bezieht sich auf ein Verfahren zum Bestimmen eines optimalen Empfangssignals von einem Mehrantennensystem bei einem FM-Gleichkanalempfang für eine Empfangsfrequenz, auf eine entsprechende Vorrichtung sowie auf ein entsprechendes Computerprogramm.

Bei adaptiven Mehrantennensystemen, wie zum Beispiel sogenannten "Digital-Directional-Antenna"-Systemen (DDA-Systeme), kann durch die Kombination mehrerer Antennensignale eine Richtwirkung erzielt werden, die zum Ausblenden eines Störsenders geeignet ist. Dabei kann allerdings nicht zwischen Nutzsender und Störsender unterschieden werden.

Wie aus der EP1619804 bekannt, kann es bei adaptiven Mehrantennensystemen wie zum Beispiel sogenannten "Digital-Directional-Antenna"-Systemen (DDA-Systemen) im Fall von Gleichkanalempfang zu abrupten Übergängen zwischen den Modulationen der überlagerten Gleichkanäle kommen. Dieser abrupte Übergang wird vom Hörer als ungewohnt oder als Fehlfunktion empfunden. Das in EP1619804 beschriebene Abschalten des adaptiven Mehrantennensystems führt wiederum teilweise zu einem deutlich verschlechterten Empfangsverhalten, was vom Hörer ebenfalls als störend empfunden wird.

US 6 141 536 A offenbart einen RDS-Empfänger mit doppelten Tunern.

### Offenbarung der Erfindung

Vor diesem Hintergrund werden mit dem hier vorgestellten Ansatz ein Verfahren zum Bestimmen eines optimalen Empfangssignals von einem Mehrantennensystem bei einem FM-Gleichkanalempfang für eine Empfangsfrequenz, weiterhin eine Vorrichtung, die dieses Verfahren verwendet sowie schließlich ein entsprechendes Computerprogramm gemäß den Hauptansprüchen vorgestellt. Vorteilhafte Ausgestaltungen ergeben sich aus den jeweiligen Unteransprüchen und der nachfolgenden Beschreibung.

Für ein Antennensignal oder ein daraus gewonnenes FM-Signal kann zumindest ein Bewertungskriterium bestimmt werden. Wenn dies für zwei Signale parallel erfolgt, können die Bewertungskriterien der beiden Signale verglichen werden und somit kann das bessere Signal für eine weitere Verwendung ausgewählt werden.

Es wird ein Verfahren zum Bestimmen eines optimalen Empfangssignals von einem Mehrantennensystem bei einem FM-Gleichkanalempfang für eine Empfangsfrequenz vorgestellt, wobei das Verfahren die folgenden Schritte aufweist:
Verarbeiten eines ersten Antennensignals zu einem ersten FM-Signal unter Verwendung einer ersten Verarbeitungsvorschrift und Verarbeiten zumindest eines zweiten Antennensignals zu einem zweiten FM-Signal unter Verwendung einer zweiten Verarbeitungsvorschrift;
Bestimmen eines ersten Bewertungskriteriums für das erste FM-Signal und eines zweiten Bewertungskriteriums für das zweite FM-Signal; und
Auswählen eines der FM-Signale als das optimale Empfangssignal für die Empfangsfrequenz unter Verwendung des ersten Bewertungskriteriums und des zweiten Bewertungskriteriums.

Ein Fahrzeug kann ein Mehrantennensystem aufweisen. Unter einem Mehrantennensystem kann ein empfangsseitiges Antennen-Array verstanden werden. Ein Mehrantennensystem kann eine höhere Empfangsfeldstärke erzielen. Das Mehrantennensystem kann zumindest eine erste Antenne zum Bereitstellen eines ersten Antennensignals sowie eine zweite Antenne zum Bereitstellen eines zweiten Antennensignals aufweisen. In einer alternativen Ausführungsform kann das Mehrantennensystem eine Mehrzahl von Antennen, beispielsweise vier Antennen, umfassen. Unter einer Empfangsfrequenz kann eine eingestellte HF-Frequenz eines Rundfunkempfängers verstanden werden. Der Schritt des Verarbeitens und der Schritt des Bestimmens können parallel für jedes der Antennensignale ausgeführt werden. Der abschließende Schritt des Auswählens kann aus der Mehrzahl der verarbeiteten Antennensignale und diesen zugeordneten Bewertungskriterien das optimale Empfangssignal auswählen. Unter einem FM-Signal kann ein frequenzmoduliertes Signal verstanden werden.

Im Schritt des Bestimmens kann als Bewertungskriterium jeweils eine RDS-Information, ein Wert einer Pilottonfrequenzabweichung oder eine Güteinformation der Pilottonfrequenzabweichung bestimmt werden. Der Pilotton des empfangenen Antennensignals kann sich um den Wert der Pilottonfrequenzabweichung von einem in dem Empfänger bereitgestellten Pilotton unterscheiden. Die Abkürzung RDS steht für "Radio Data System" (RDS; wörtlich übersetzt: Radiodatensystem) und die dahinter stehende Technologie ermöglicht die Übermittlung von Zusatzinformationen beim Hörfunk. Die RDS-Information kann eine Information für Programmkennung, Verkehrsfunk und Alternativfrequenzen oder weitere Zusatzinformationen umfassen. Insbesondere kann als RDS-Information ein PI-Code, auch "Program-Identification-Code" genannt, bestimmt werden.

Die Güteinformation kann unter Verwendung eines Zählers bestimmt werden. Dabei kann der Zähler bei einer über einem Schwellwert liegenden Empfangsqualität des ersten und/oder zweiten Antennensignals um ein Inkrement inkrementiert werden. Bei einer unterhalb des Schwellwerts liegenden Empfangsqualität des ersten und/oder zweiten Antennensignals kann der Zähler um ein Dekrement dekrementiert werden. Entspricht die Empfangsqualität dem Schwellwert, so kann der Zähler ebenfalls um das Inkrement inkrementiert werden. Dabei kann das Dekrement größer als das Inkrement sein. In einer Ausführungsform kann der Zähler nicht kleiner null werden, das heißt, der Zähler kann keinen negativen Wert aufweisen.

Im Schritt des Bestimmens kann ein gleitender Mittelwert über den Wert der Pilottonfrequenzabweichung bestimmt werden. Dabei kann bei Überschreiten eines Güteschwellwerts durch die Güteinformation ein Sollwert für eine Pilottonfrequenz und/oder ein Sollwert für die Pilottonfrequenzabweichung neu bestimmt werden. Insbesondere kann der Sollwert für die Pilottonfrequenz und/oder der Sollwert der Pilottonfrequenzabweichung unter Verwendung des gleitenden Mittelwerts des Werts der Pilottonfrequenzabweichung angepasst werden. Der Güteschwellwert kann beispielsweise als ein Prozentwert definiert sein. Bei Überschreiten des Güteschwellwerts kann der Sollwert der Pilottonfrequenzabweichung für die entsprechende Empfangsfrequenz neu gesetzt werden. Beispielsweise kann der Wert der lang gemittelten Pilottonfrequenzabweichung als neuer Sollwert verwendet werden.

Ferner kann das Verfahren in einer Ausführungsform einen Schritt des Wechselns aufweisen. Im Schritt des Wechselns kann unter Verwendung eines Auswahlsignals zwischen einem ersten Signalpfad und einem zweiten Signalpfad gewechselt werden. Dabei kann der erste Signalpfad den Schritt des Verarbeitens, den Schritt des Bestimmens sowie den Schritt des Wählens umfassen. Im zweiten Signalpfad kann durch Kombination der Antennensignale und Verarbeitens des kombinierten Antennensignals unter Verwendung eines adaptiven Mehrwegealgorithmus das optimale Empfangssignal für die Empfangsfrequenz bestimmt werden.

Das im Schritt des Auswählens verwendete Auswahlsignal kann unter Verwendung des ersten Antennensignals und des zweiten Antennensignals oder daraus abgeleiteter Signale bestimmt werden. Das im Schritt des Auswählens verwendete Auswahlsignal kann unter Verwendung eines ersten Betrags einer ersten Pilottonabweichung des ersten Antennensignals und eines zweiten Betrags einer zweiten Pilottonabweichung des zweiten Antennensignals bestimmt werden. Das im Schritt des Auswählens verwendete Auswahlsignal kann unter Verwendung von Bewertungskriterien bestimmt werden.

Ferner kann der zweite Signalpfad zumindest einen Schritt des Kombinierens und einen weiteren Schritt des Verarbeitens umfassen. Dabei können im Schritt des Kombinierens das erste Antennensignal und das zumindest zweite Antennensignal zu einem Antennensignal kombiniert werden. Im weiteren Schritt des Verarbeitens kann das kombinierte Antennensignal unter Verwendung einer Verarbeitungsvorschrift und/oder des adaptiven Mehrwegealgorithmus zu dem FM-Signal und/oder dem optimalen Empfangssignal verarbeitet werden.

Die Schritte des Verfahrens können wiederholt ausgeführt werden. Bei einem ersten Ausführen des Verfahrens kann der zweite Signalpfad gewählt werden oder die Schritte des zweiten Signalpfads ausgeführt werden. Dabei kann der weitere Schritt des Verarbeitens von einem weiteren Schritt des Bestimmens eines Bewertungskriteriums für das FM-Signal gefolgt werden. Das im Schritt des Auswählens verwendete Auswahlsignal kann unter Verwendung des Bewertungskriteriums bestimmt werden.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Der hier vorgestellte Ansatz wird nachstehend anhand der beigefügten Zeichnungen beispielhaft näher erläutert. Es zeigen:
Fig. 1 ein Ablaufdiagramm eines Verfahrens gemäß einem Ausführungsbeispiel der vorliegenden Erfindung;
Fig. 2 ein Blockschaltbild einer Vorrichtung gemäß einem Ausführungsbeispiel der vorliegenden Erfindung;
Fig. 3 ein Blockschaltbild einer Vorrichtung gemäß einem Ausführungsbeispiel der vorliegenden Erfindung;
Fig. 4 ein Blockschaltbild einer Vorrichtung gemäß einem Ausführungsbeispiel der vorliegenden Erfindung; und
Fig. 5 eine schematische Darstellung eines Fahrzeugs mit einem Mehrantennensystem und einer Vorrichtung zum Bestimmen eines optimalen Empfangssignals gemäß einem Ausführungsbeispiel der vorliegenden Erfindung.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

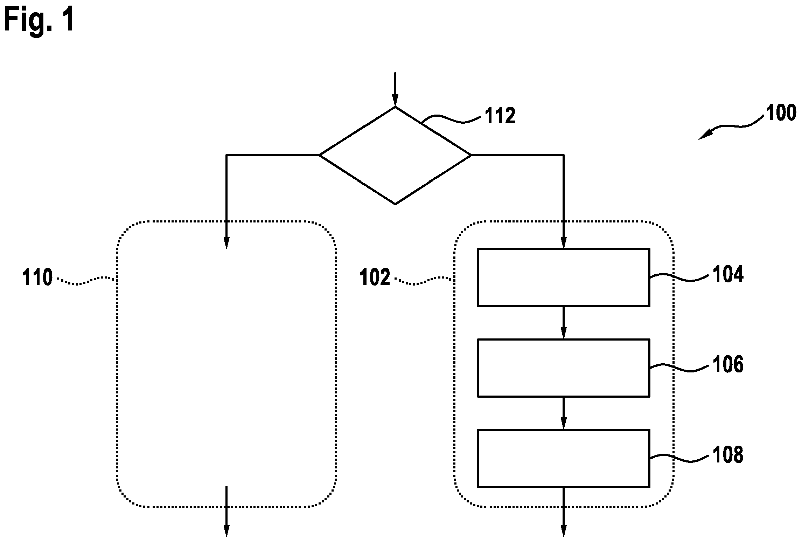

Fig. 1 zeigt ein Verfahren 100 zum Bestimmen eines optimalen Empfangssignals von einem Mehrantennensystem bei einem FM-Gleichkanalempfang für eine Empfangsfrequenz gemäß einem Ausführungsbeispiel der vorliegenden Erfindung. Das Verfahren 100 umfasst in einem ersten Signalpfad 102 einen Schritt 104 des Verarbeitens, einen Schritt 106 des Bestimmens sowie einen Schritt 108 des Auswählens. In dem Schritt 104 des Verarbeitens wird ein erstes Antennensignal unter Verwendung einer ersten Verarbeitungsvorschrift zu einem ersten FM-Signal verarbeitet. Weiterhin wird in dem Schritt 104 des Verarbeitens parallel zum Verarbeiten des ersten Antennensignals ein zweites Antennensignal unter Verwendung einer zweiten Verarbeitungsvorschrift zu einem zweiten FM-Signal verarbeitet. Im Schritt 106 des Bestimmens wird für das erste FM-Signal ein erstes Bewertungskriterium und für das zweite FM-Signal ein zweites Bewertungskriterium bestimmt. In einem Ausführungsbeispiel erfolgen das Bestimmen des ersten Bewertungskriteriums und das Bestimmen des zweiten Bewertungskriteriums parallel zueinander. In dem Schritt 108 des Auswählens wird als optimales Empfangssignal unter Verwendung des ersten Bewertungskriteriums und des zweiten Bewertungskriteriums eines der beiden FM-Signale ausgewählt. Das Bewertungskriterium repräsentiert eine Qualitätsinformation für das zugeordnete Antennensignal oder FM-Signal.

Im Schritt 108 des Auswählens wird das optimale Empfangssignal unter Verwendung eines zu den Bewertungskriterien korrespondierenden Referenzkriteriums ausgewählt. Das Bewertungskriterium repräsentiert je nach Ausführungsbeispiel eine RDS-Information, wie beispielsweise einen PI-Code, einen Wert einer Pilottonfrequenzabweichung oder eine Güteinformation der Pilottonfrequenzabweichung bzw. eine Güteinformation des Antennensignals.

Das Verfahren 100 weist neben dem ersten Signalpfad 102 einen zweiten Signalpfad 110 auf. Der zweite Signalpfad 110 kombiniert die Antennensignale zu einem kombinierten Antennensignal und verarbeitet das kombinierte Antennensignal unter Verwendung eines adaptiven Mehrwegealgorithmus, um das optimale Empfangssignal zu bestimmen. Zwischen dem ersten Signalpfad 102 und dem zweiten Signalpfad 104 schaltet ein weiterer Schritt 112 des Auswählens unter Verwendung eines Auswahlsignals um.

In einem Ausführungsbeispiel wird bei einem ersten Ausführen des Verfahrens 100 der zweite Signalpfad gewählt, um im Folgenden das Auswahlsignal unter Verwendung des Bewertungskriteriums oder der Bewertungskriterien zu ermitteln.

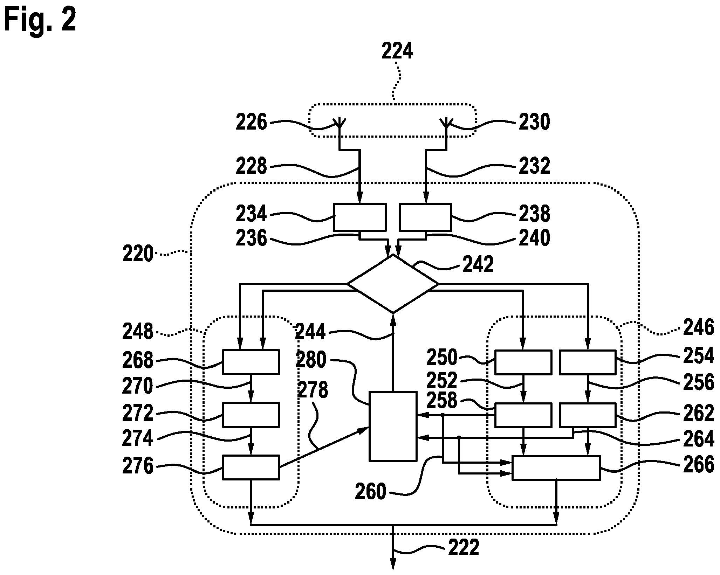

Fig. 2 zeigt ein Blockschaltbild einer Vorrichtung 220 zum Bestimmen eines optimalen Empfangssignals 222 von einem Mehrantennensystem 224 bei einem FM-Gleichkanalempfang für eine Empfangsfrequenz gemäß einem Ausführungsbeispiel der vorliegenden Erfindung. In dem dargestellten Ausführungsbeispiel umfasst das Mehrantennensystem 224 eine erste Antenne 226, die ein erstes Antennensignal 228 an einer Schnittstelle bereitstellt, sowie eine zweite Antenne 230, die ein zweites Antennensignal 232 an einer Schnittstelle bereitstellt.

Die Vorrichtung 220 ist ausgebildet, die Antennensignale 228, 232 einzulesen und in einem ersten HF-Verarbeitungsblock 234 das erste Antennensignal 228 vorzuverarbeiten und als erstes vorverarbeitetes Antennensignal 236 bereitzustellen und in einem zweiten HF-Verarbeitungsblock 238 das zweite Antennensignal 232 vorzuverarbeiten und als zweites vorverarbeitetes Antennensignal 240 bereitzustellen. Die vorverarbeiteten Antennensignale 236, 240 werden an eine Auswahleinrichtung 242 geleitet.

In dem in Fig. 2 dargestellten Ausführungsbeispiel werden die vorverarbeiteten Antennensignale 236, 240 ansprechend auf ein Auswahlsignal 244 von der Auswahleinrichtung 242 an eine erste Signalverarbeitungseinrichtung 246 oder an eine zweite Signalverarbeitungseinrichtung 248 geleitet. Dabei ist die Auswahleinrichtung 242 ausgebildet, die vorverarbeiteten Antennensignale 236, 240 an die zweite Signalverarbeitungseinrichtung 248 zu leiten, wenn kein Auswahlsignal 244 anliegt, wie beispielsweise bei einem ersten Bestimmen des optimalen Empfangssignals 222.

Eine erste Verarbeitungseinrichtung 250 der ersten Signalverarbeitungseinrichtung 246 ist ausgebildet, ein erstes FM-Signal 252 bereitzustellen unter Verwendung einer ersten Verarbeitungsvorschrift und des ersten vorverarbeiteten Antennensignals 236. Eine zweite Verarbeitungseinrichtung 254 der ersten Signalverarbeitungseinrichtung 246 ist ausgebildet, ein zweites FM-Signal 256 bereitzustellen unter Verwendung einer zweiten Verarbeitungsvorschrift und des zweiten vorverarbeiteten Antennensignals 240. Dabei entspricht in einem Ausführungsbeispiel die erste Verarbeitungsvorschrift der zweiten Verarbeitungsvorschrift.

Eine erste Bestimmungseinrichtung 258 der ersten Signalverarbeitungseinrichtung 246 ist ausgebildet, für das erste FM-Signal 252 ein erstes Bewertungskriterium 260 zu bestimmen. Eine zweite Bestimmungseinrichtung 262 der ersten Signalverarbeitungseinrichtung 246 ist ausgebildet, für das zweite FM-Signal 256 ein zweites Bewertungskriterium 264 zu bestimmen.

Je nach Ausführungsbeispiel repräsentieren die Bewertungskriterien 260, 264 jeweils eine RDS-Information, einen Wert oder einen Betrag einer Pilottonfrequenzabweichung oder eine Güteinformation der Pilottonfrequenzabweichung. Ein Beispiel für eine RDS-Information ist ein senderspezifischer PI-Code.

Eine Auswahleinrichtung 266 der ersten Signalverarbeitungseinrichtung 246 ist ausgebildet, eines der FM-Signale 252, 256 als das optimale Empfangssignal 222 unter Verwendung der Bewertungskriterien 260, 264 auszuwählen.

In einem günstigen Ausführungsbeispiel werden als Bewertungskriterium 260, 264 je ein FM-Signal 252, 256 ein PI-Code, eine Pilottonfrequenzabweichung sowie eine Güteinformation bestimmt. Die Auswahl des optimalen Empfangssignals 222 kann in einem iterativen Verfahren erfolgen. Wenn nur eines der FM-Signale 252, 256 einen PI-Code aufweist, der einem PI-Code-Sollwert entspricht, so wird das entsprechende FM-Signal 252, 256 als optimales Empfangssignal 222 ausgewählt. Wenn im ersten Teilschritt kein optimales Empfangssignal 222 bestimmt werden konnte, wird in einem zweiten Teilschritt der Wert der Pilottonfrequenzabweichung mit einem Sollwert für die Pilottonfrequenzabweichung verglichen. Wenn nur eines der FM-Signale 252, 256 einem Sollwert für die Pilottonfrequenzabweichung entspricht, so wird dieses FM-Signal 252, 256 als optimales Empfangssignal 222 bestimmt. Ansonsten wird die Güteinformation der FM-Signale 252, 256 ausgewertet und das FM-Signal 252, 256 mit der besseren Güteinformation als optimales Empfangssignal 222 bestimmt.

Eine Einrichtung 268 des Kombinierens ist ausgebildet, die vorverarbeiteten Antennensignale 236, 240 zu einem kombinierten Antennensignal 270 zu kombinieren. Eine Verarbeitungseinrichtung 272 der zweiten Signalverarbeitungseinrichtung 248 ist ausgebildet, ein FM-Signal 274 bereitzustellen unter Verwendung einer dritten Verarbeitungsvorschrift und des kombinierten Antennensignals 270. Eine Bestimmungseinrichtung 276 der zweiten Signalverarbeitungseinrichtung 248 ist ausgebildet, für das FM-Signal 274 ein Bewertungskriterium 278 zu bestimmen.

Die Vorrichtung 220 weist weiterhin eine Einrichtung 280 zum Erstellen des Auswahlsignals 244 auf. Die Einrichtung 280 zum Erstellen des Auswahlsignals 244 weist eine Schnittstelle zum Empfangen der Bewertungskriterien 260, 264 oder alternativ 278 sowie eine weitere Schnittstelle zum Bereitstellen des Auswahlsignals 244 auf. Die Einrichtung 280 zum Erstellen des Auswahlsignals 244 ist ausgebildet, das Auswahlsignal 244 unter Verwendung der Bewertungskriterien 260, 264 oder alternativ dem Bewertungskriterium 278 zu erstellen.

In einem nicht gezeigten Ausführungsbeispiel sind die erste Signalverarbeitungseinrichtung 246 und die zweite Signalverarbeitungseinrichtung 248 ineinander kombiniert. In diesem Fall schaltet die Einrichtung 268 des Kombinierens bei Auswahl der ersten Signalverarbeitungseinrichtung 246 die anliegenden Signale unverändert durch und bei Auswahl der zweiten Signalverarbeitungseinrichtung 248 werden die anliegenden Signale kombiniert und mit der ersten Verarbeitungseinrichtung 250 weiterverarbeitet.

Die Vorrichtung 220 schafft eine Empfangsoptimierung von Mehrantennensystemen 224 bei FM-Gleichkanalempfang, das heißt eine Verbesserung der Empfangsqualität. Die gewünschte Modulation wird über einen möglichst großen Zeitraum empfangen. Das Wechseln zwischen der gewünschten Modulation und der Modulation des Gleichkanalsenders wird bestmöglich vermieden. Die verschiedenen Empfangsantennen 226, 230 eines Mehrantennensystems 224 weisen in der Regel unterschiedliche Richtungscharakteristiken auf. Im Fall von FM-Gleichkanalempfang wird das Mehrantennensystem 224 vom adaptiven "DDA-Modus" in einen Modus geschaltet, in dem jede Antenne 226, 230 fest mit einem Signalverarbeitungspfad verknüpft ist. Durch eine Auswahllogik 242 - unter Einbeziehung der Einrichtung 280 zum Erstellen des Auswahlsignals 244 - wird nun basierend auf den Kriterien RDS-Informationen und Pilottonfrequenzablage ständig der Empfangspfad mit dem besten Empfang des gewünschten Senders ausgewählt.

Vorteilhaft wird als optimiertes Empfangssignal 222 ein Nutzsignal oder bei einem Betrieb mit Phasendiversity ein ungestörtes Gleichkanalsignal wiedergegeben.

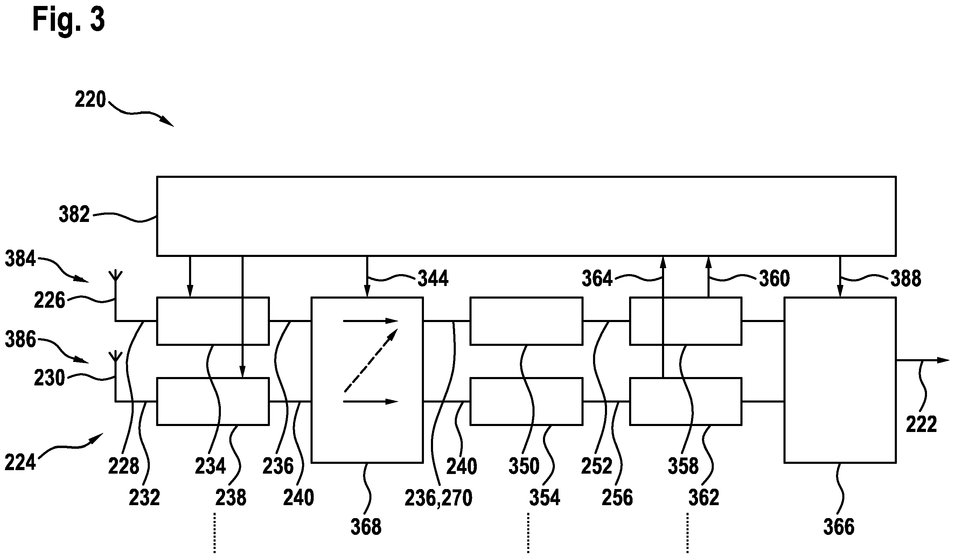

Fig. 3 zeigt ein Blockschaltbild einer Vorrichtung 220 gemäß einem Ausführungsbeispiel der vorliegenden Erfindung. Bei der Vorrichtung 220 kann es sich um eine Variante eines Ausführungsbeispiels der in Fig. 2 beschriebenen Vorrichtung 220 zum Bestimmen eines optimalen Empfangssignals 222 von einem Mehrantennensystem 224 bei einem FM-Gleichkanalempfang für eine Empfangsfrequenz handeln. Neben der Vorrichtung 220 ist in Fig. 3 weiterhin ein Mehrantennensystem 224 mit einer ersten Antenne 226 sowie einer zweiten Antenne 230 dargestellt. Die erste Antenne 226 stellt an einer Schnittstelle des Mehrantennensystems 224 ein erstes Antennensignal 228 bereit. Die zweite Antenne 230 stellt an der Schnittstelle des Mehrantennensystems 224 ein zweites Antennensignal 232 bereit. In einem nicht dargestellten Ausführungsbeispiel umfasst das Mehrantennensystem 224 weitere Antennen, die weitere Antennensignale an der Schnittstelle des Mehrantennensystems 224 bereitstellen.

Die Vorrichtung 220 umfasst zwei HF-Verarbeitungsblöcke 234, 238, eine Einrichtung 368 des Kombinierens und Auswählens, zwei Signalverarbeitungseinrichtungen 350, 354, zwei Bestimmungseinrichtungen 358, 362 sowie eine Auswahleinrichtung 266. Weiterhin weist die Vorrichtung 220 eine Steuereinrichtung 382 auf. Der erste HF-Verarbeitungsblock 234 ist ausgebildet, das erste Antennensignal 228 einzulesen und ein vorverarbeitetes Antennensignal 236 bereitzustellen. Der zweite HF-Verarbeitungsblock 238 ist ausgebildet, das zweite Antennensignal 232 einzulesen und ein vorverarbeitetes Antennensignal 240 bereitzustellen. Die Auswahleinrichtung 266 ist ausgebildet, ein optimales Empfangssignal 222 bereitzustellen. So ist die Vorrichtung 220 ausgebildet, aus einer Mehrzahl von Antennensignalen 228, 232 ein optimales Empfangssignal 222 zu gewinnen.

Die Einrichtung 368 des Kombinierens und Auswählens ist ausgebildet, die vorverarbeiteten Antennensignale 236, 240 sowie ein Auswahlsignal 344 einzulesen und ansprechend auf das Auswahlsignal 344 entweder die anliegenden Antennensignale zu kombinieren und als ein kombiniertes Ausgangssignal 270 bereitzustellen oder alternativ die anliegenden vorverarbeiteten Antennensignale 236, 240 unverändert bereitzustellen. Ein erster Verarbeitungspfad 384 ist ausgebildet, entweder das kombinierte Ausgangssignal 270 oder das erste vorverarbeitete Antennensignal 236 zu verarbeiten. Ein zweiter Verarbeitungspfad 386 ist ausgebildet, das zweite vorverarbeitete Antennensignal 240 zu verarbeiten.

Die Kombination des ersten Verarbeitungspfads 384 mit dem zweiten Verarbeitungspfad 386 entspricht dem in Fig. 2 gezeigten ersten Signalpfad 246.

Wenn nur der erste Verarbeitungspfad 384 aktiv ist und die Einrichtung 368 des Kombinierens und Auswählens die anliegenden Signale 236, 240 ansprechend auf das Auswahlsignal 344 zu einem kombinierten Antennensignal 270 kombiniert, und die weiteren Einrichtungen 350, 358 das kombinierte Ausgangssignal 270 verarbeiten, so entspricht dies dem in Fig. 2 gezeigten zweiten Signalpfad 248. Diese Konstellation oder erste Grundkonfiguration wird auch als DDA-Betrieb oder als DDA-Empfangspfad bezeichnet.

Die Signalverarbeitungseinrichtung 350 ist ausgebildet, ein erstes FM-Signal 252 bereitzustellen. Die zweite Signalverarbeitungseinrichtung 354 ist ausgebildet, ein zweites FM-Signal 256 bereitzustellen. Die erste Bestimmungseinrichtung 358 ist ausgebildet, ein erstes Bewertungskriterium 360 für das erste FM-Signal 252 zu bestimmen. Die zweite Bestimmungseinrichtung 362 ist ausgebildet, ein zweites Bewertungskriterium 364 für das zweite FM-Signal 256 zu bestimmen.

Die Auswahleinrichtung 366 ist ausgebildet, ansprechend auf ein Steuersignal 388 das optimale Empfangssignal 222 aus den anliegenden FM-Signalen 252, 256 auszuwählen. Das Steuersignal 388 wird unter Verwendung der Bewertungskriterien 360, 364 von der Steuereinrichtung 382 bestimmt und bereitgestellt. Die Steuereinrichtung 382 ist weiterhin ausgebildet, das Auswahlsignal 344 bereitzustellen. Dabei ist die Steuereinrichtung 382 weiterhin ausgebildet, das Auswahlsignal 344 unter Verwendung der Bewertungskriterien 360, 364 zu bestimmen. Weiterhin stellt die Steuereinrichtung 382 Steuersignale für die HF-Verarbeitungsblöcke 234, 238 bereit.

In einem Verarbeitungsblock 234, 238 erfolgt die Hochfrequenzverarbeitung des Empfangssignals 228, 232 einer Antenne 226, 230. Es wird beispielsweise eine Bandbegrenzung, eine Signalverstärkung und eine Mischung des Signals auf eine Zwischenfrequenz oder direkt in das Basisband durchgeführt. Die identische Verarbeitung wird mit weiteren Antennen derart durchgeführt, dass alle Hochfrequenzverarbeitungsblöcke 234, 238 auf die identische Frequenz abgestimmt werden. Die Ausgangssignale 236, 240 der Hochfrequenzverarbeitungsblöcke 234, 238 werden nun dem adaptiven Mehrantennensystem 368 zugeführt und in dem adaptiven Mehrantennensystem 368 in geeigneter Art und Weise kombiniert. In einer Signalverarbeitungseinheit 350 wird das Ausgangssignal 270 des adaptiven Mehrantennensystems 368 weiterverarbeitet, beispielsweise erfolgt hier eine Frequenzdemodulation. In einer weiteren Signalverarbeitungseinheit 358 erfolgt die Stereodecodierung sowie die Demodulation und Decodierung des RDS-Signals. Der Stereodecoder generiert weiter ein Signal, das die Frequenzabweichung des empfangenen Pilottons von dem im Stereodecoder erzeugten 19kHz-Referenzsignal angibt. Das so erzeugte Signal ist ein Teil des Bewertungskriteriums 360.

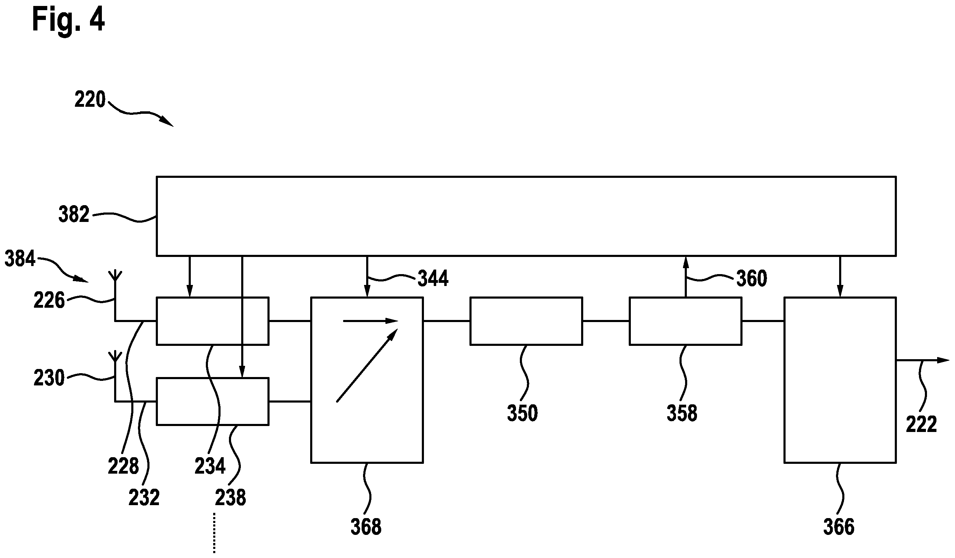

In einer Steuereinheit 382 erfolgen die Konfiguration sowie die Steuerung der einzelnen Signalverarbeitungsblöcke 234, 238, 366, 368. Für den Betrieb ist hierbei zwischen zwei Grundkonfigurationen zu unterscheiden. In der einen Konfiguration wird, wie in Fig. 2 und Fig. 4 dargestellt, das Signal der unterschiedlichen Empfangsantennen 226, 230 mittels des adaptiven Algorithmus kombiniert und die weitere Signalverarbeitung erfolgt nur einmal. In der zweiten Konfiguration, wie in Fig. 2 und Fig. 3 dargestellt, wird kein Gebrauch von der Kombination durch den adaptiven Algorithmus gemacht. Die Signalverarbeitung erfolgt für jeden Antennensignalpfad getrennt:
In der Steuereinheit 382 werden permanent die aktuell empfangene Frequenzabweichung des Pilottons sowie die aktuell empfangenen RDS-Informationen in Form des Bewertungskriteriums 360 überwacht. Für den Fall der Konfiguration mit adaptivem Mehrwegeempfangsalgorithmus wird ein Signal 360 erzeugt, für den Fall der alternativen Grundkonfiguration wird, wie in Fig. 2 und Fig. 3 gezeigt, für jeden Antennensignalpfad ein separates Signal 360, 364 erzeugt.

Zusätzlich zur Frequenzabweichung wird ein Gütesignal für die ermittelte Frequenzabweichung erzeugt. Dieses Gütesignal gibt an, wie vertrauenswürdig die ermittelte Frequenzabweichung ist. Das Gütesignal ist eine Art Zähler, der mit einer gewissen Rate (beispielsweise alle 100ms) aktualisiert wird. Im Falle guten Empfangs wird der Zähler um ein Inkrement vergrößert. Bei schlechtem Empfang wie beispielsweise niedriger Empfangsfeldstärke, Mehrwege- oder Nachbarkanalempfang wird der Zähler um ein Dekrement verkleinert. Das Dekrement ist normalerweise deutlich größer als das Inkrement.

Für die Frequenzabweichung wird zusätzlich ein sehr lang gemitteltes Signal erzeugt, das nur langsam auf Änderungen reagiert. Bei einer Frequenzverstimmung wird das lang gemittelte Signal zurückgesetzt und die Mittelung beginnt mit dem Momentanwert. Ebenso wird der Gütewert bei einer Frequenzverstimmung zu Null zurückgesetzt.

Überschreitet das Gütesignal eine vorgegebene Schwelle, wird der Wert der lang gemittelten Pilottonfrequenzabweichung als Sollwert der Pilottonfrequenzabweichung für die aktuell eingestellte Empfangsfrequenz verwendet. Der Schwellwert sowie die Zeitkonstanten der Mittelung der Pilottonfrequenzabweichung und das Inkrement des Gütesignals werden dabei so gewählt, dass sämtliche Einschwingprozesse beim Überschreiten der Schwelle beendet sind. Der Sollwert bleibt so lange erhalten, bis die Empfangsfrequenz geändert wird und sich dadurch eine neue Konstellation ergibt. Alternativ bleibt der Sollwert solange erhalten, bis das Gütesignal die vorgegebene Schwelle überschreitet und dadurch eine Änderung des Sollwerts initiiert.

Wird der adaptive Mehrantennenempfangsalgorithmus (DDA) deaktiviert oder die Antennensignale 236, 240 in der Einrichtung 368 zum Kombinieren nicht kombiniert, verfällt das Empfangssystem 220 automatisch in die zweite Grundkonfiguration, das heißt, es wechselt in den ersten Signalpfad 246, in der jeder Antennensignalpfad einzeln verarbeitet wird.

Die Steuereinheit 382 vergleicht nun ständig die Werte der Pilottonfrequenzabweichung der einzelnen Antennensignalpfade mit dem im DDA-Betrieb ermittelten Sollwert. Weiter werden ständig die decodierten RDS-Informationen aller Antennensignalempfangspfade mit den im DDA-Betrieb ermittelten Soll-RDS-Informationen verglichen. Hauptsächlich wird hierfür der PI-Code (Program Identification Code) verwendet.

Über die Auswahleinrichtung 366, auch als Umschalter 366 bezeichnet, kann die Steuereinheit 382 das Audiosignal 252, 256 eines der Antennensignalpfade 384, 386 auswählen und zur weiteren Signalverarbeitung weiterleiten. Im Fall des DDA-Betriebs wird das Audiosignal 252 des DDA-Empfangspfads 384 verwendet. Im Fall des Betriebs in der zweiten Grundkonfiguration wird der Antennenempfangspfad 384, 386 ausgewählt, dessen Signal dem gewünschten Sender am besten entspricht. Hierzu werden sowohl die RDS-Informationen als auch die Pilottonfrequenzabweichungen bei ausreichender Güte verwendet.

Im Folgenden ist ein Ablauf zur Auswahl des optimalen Empfangssignals 222 im Zusammenspiel der Bewertungskriterien 360, 364 sowie der Steuereinrichtung 382 dargestellt, der in dem der Auswahleinrichtung 366 bereitgestellten Steuersignal 388 resultiert. Zunächst wird verglichen, ob ein Antennensignalpfad gefunden wird, dessen RDS-Information mit der Soll-RDS Information übereinstimmt. Gibt es nur einen Antennensignalpfad, für den dieses Kriterium zutrifft, so wird dieser Antennensignalpfad für die Weiterverarbeitung ausgewählt.

Trifft das RDS-Kriterium auf mehrere Antennensignalpfade zu, so wird weiter die Pilottonfrequenzabweichung aller Antennensignalpfade analysiert. Entspricht die Pilottonfrequenzabweichung eines Antennensignalpfads dem Sollwert, so wird dieser Antennensignalpfad für die weitere Verarbeitung verwendet. Trifft das Kriterium auf mehrere Antennensignalpfade zu, so wird der Antennensignalpfad mit der höchsten Güteinformation verwendet.

Findet sich kein Antennensignalpfad mit der der Soll-RDS Information entsprechenden RDS-Information, so werden die Pilottonfrequenzabweichungen analysiert und der Antennensignalpfad ausgewählt, dessen Pilottonfrequenzabweichung dem Sollwert entspricht. Trifft das Kriterium auf mehrere Antennensignalpfade zu, so wird der Antennensignalpfad mit der höchsten Güteinformation verwendet.

Lässt sich über den Vergleich der RDS-Informationen und der Pilottonfrequenzabweichungen keine Übereinstimmung mit den Sollwerten finden, so wird der Antennensignalpfad mit der höchsten Güte für die weitere Verarbeitung ausgewählt.

Die Auswahl der Antennensignalpfade für die weitere Signalverarbeitung erfolgt in einem Ausführungsbeispiel etwa alle 1 Sekunde.

Fig. 4 zeigt ein Blockschaltbild einer Vorrichtung 220 gemäß einem Ausführungsbeispiel der vorliegenden Erfindung. Die Darstellung in Fig. 4 entspricht weitgehend der Darstellung in Fig. 3 mit dem Unterschied, dass auf auf eine Darstellung des zweiten Verarbeitungspfads verzichtet wurde und die Einrichtung 368 des Kombinierens und Auswählens im Modus des Kombinierens der anliegenden Signale konfiguriert ist. Dies stellt den bereits beschriebenen DDA-Betrieb dar.

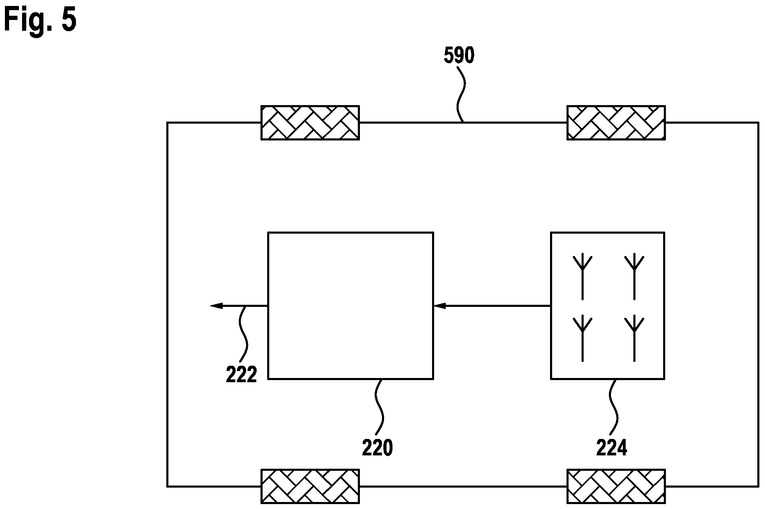

Fig. 5 zeigt eine schematische Darstellung eines Fahrzeugs 590 mit einem Mehrantennensystem 224 und einer Vorrichtung 220 zum Bestimmen eines optimalen Empfangssignals 222 gemäß einem Ausführungsbeispiel der vorliegenden Erfindung. Bei der Vorrichtung 220 kann es sich um eine Variante eines in den vorangegangenen Figuren gezeigten Ausführungsbeispiels einer Vorrichtung 220 zum Bestimmen eines optimalen Empfangssignals 222 handeln. Das in Fig. 5 dargestellte Mehrantennensystem 224 weist zumindest vier Antennen auf. Die Antennensignale werden an die Vorrichtung 220 geleitet und von dieser weiterverarbeitet.
In einem Ausführungsbeispiel findet eine Vorverarbeitung der Antennensignale des Mehrantennensystems 224 bereits innerhalb des Mehrantennensystems 224 statt.
Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden. Der Schutzumfang der Erfindung wird jedoch durch die nachfolgenden Ansprüche definiert. Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (100) zum Bestimmen eines optimalen Empfangssignals (222) von einem Mehrantennensystem (224) bei einem FM-Gleichkanalempfang für eine Empfangsfrequenz, wobei das Verfahren (100) die folgenden Schritte aufweist:
Verarbeiten (104) eines ersten Antennensignals (228, 236) zu einem ersten FM-Signal (252) unter Verwendung einer ersten Verarbeitungsvorschrift und Verarbeiten zumindest eines zweiten Antennensignals (232, 240) zu einem zweiten FM-Signal (256) unter Verwendung einer zweiten Verarbeitungsvorschrift;
Bestimmen (106) eines ersten Bewertungskriteriums (260) für das erste FM-Signal (252) und eines zweiten Bewertungskriteriums (264) für das zweite FM-Signal (256), wobei als Bewertungskriterium (260, 264) jeweils eine RDS-Information bestimmt wird;
Auswählen (108) eines der FM-Signale (252, 256) als das optimale Empfangssignal (222) für die Empfangsfrequenz unter Verwendung des ersten Bewertungskriteriums (260) und des zweiten Bewertungskriteriums (264), wobei, wenn nur eines der FM-Signale (252, 256) eine RDS-Information aufweist, die einer Soll-RDS Information entspricht, das entsprechende FM-Signal (252, 256) als das optimale Empfangssignal (222) ausgewählt wird;
Erneutes Bestimmen (106) eines ersten Bewertungskriteriums (260) für das erste FM-Signal (252) und eines zweiten Bewertungskriteriums (264) für das zweite FM-Signal (256), wenn in dem vorangegangenen Schritt des Auswählens (108) kein optimales Empfangssignal (222) ausgewählt wurde, wobei als Bewertungskriterium (260, 264) jeweils ein Wert einer Pilottonfrequenzabweichung bestimmt wird;
Auswählen (108) eines der FM-Signale (252, 256) als das optimale Empfangssignal (222) für die Empfangsfrequenz unter Verwendung des ersten Bewertungskriteriums (260) und des zweiten Bewertungskriteriums (264), wobei, wenn nur eines der FM-Signale (252, 256) einen Wert einer Pilottonfrequenzabweichung aufweist, der einem Sollwert für die Pilottonfrequenzabweichung entspricht, das entsprechende FM-Signal (252, 256) als das optimale Empfangssignal (222) ausgewählt wird;
Erneutes Bestimmen (106) eines ersten Bewertungskriteriums (260) für das erste FM-Signal (252) und eines zweiten Bewertungskriteriums (264) für das zweite FM-Signal (256), wenn in den vorangegangenen Schritten des Auswählens (108) kein optimales Empfangssignal (222) ausgewählt wurde, wobei als Bewertungskriterium (260, 264) jeweils eine Güteinformation des FM-Signals bestimmt wird; und
Auswählen (108) eines der FM-Signale (252, 256) als das optimale Empfangssignal (222) für die Empfangsfrequenz unter Verwendung des ersten Bewertungskriteriums (260) und des zweiten Bewertungskriteriums (264), wobei das FM-Signal (252, 256) mit der besseren Güteinformation als das optimale Empfangssignal (222) ausgewählt wird.

2. Verfahren (100) gemäß Anspruch 1, bei dem im Schritt (106) des Bestimmens als RDS-Information ein PI-Code bestimmt wird.

3. Verfahren (100) gemäß Anspruch 2, bei dem die Güteinformation unter Verwendung eines Zählers bestimmt wird, wobei der Zähler bei einer über einem Schwellwert liegenden Empfangsqualität des ersten und/oder zweiten Antennensignals (228, 232, 236, 240) um ein Inkrement inkrementiert, und bei einer unterhalb des Schwellwerts liegenden Empfangsqualität des ersten und/oder zweiten Antennensignals (228, 232, 236, 240) um ein Dekrement dekrementiert wird.

4. Verfahren (100) gemäß einem der vorangegangenen Ansprüche 2 bis 3, bei dem im Schritt (106) des Bestimmens ein gleitender Mittelwert über den Wert der Pilottonfrequenzabweichung bestimmt wird, wobei bei Überschreiten eines Güteschwellwerts durch die Güteinformation ein Sollwert für eine Pilottonfrequenz und/oder Pilottonfrequenzabweichung neu bestimmt wird, insbesondere wobei der Sollwert für die Pilottonfrequenz und/oder Pilottonfrequenzabweichung unter Verwendung des gleitenden Mittelwerts des Werts der Pilottonfrequenzabweichung angepasst wird.

5. Verfahren (100) gemäß einem der vorangegangenen Ansprüche, mit einem Schritt (112) des Wechselns, in dem unter Verwendung eines Auswahlsignals (244) zwischen einem ersten Signalpfad (102), der den Schritt (104) des Verarbeitens, den Schritt (106) des Bestimmens und den Schritt (108) des Wählens umfasst, und einem zweiten Signalpfad (110), der durch Kombination der Antennensignale (228, 232, 236, 240) und Verarbeitens eines adaptiven Mehrwegealgorithmus das optimale Empfangssignal (222) für die Empfangsfrequenz bestimmt.

6. Verfahren (100) gemäß Anspruch 5, wobei das im Schritt (112) des Auswählens verwendete Auswahlsignal (244) unter Verwendung des ersten Antennensignals (228) und des zweiten Antennensignals (232) oder daraus abgeleiteter Signale (236, 240) und/oder unter Verwendung eines ersten Betrags einer ersten Pilottonabweichung des ersten Antennensignals (228) und eines zweiten Betrags einer zweiten Pilottonabweichung des zweiten Antennensignals (232) und/oder unter Verwendung von Bewertungskriterien (260, 264, 278) bestimmt wird.

7. Verfahren (100) gemäß einem der Ansprüche 5 bis 6, wobei der zweite Signalpfad (110) zumindest einen Schritt des Kombinierens und einen weiteren Schritt des Verarbeitens umfasst, wobei im Schritt des Kombinierens das erste Antennensignal (228, 236) und das zweite Antennensignal (232, 240) zu einem Antennensignal (270) kombiniert werden und im weiteren Schritt des Verarbeitens das kombinierte Antennensignal (270) unter Verwendung einer Verarbeitungsvorschrift und/oder des adaptiven Mehrwegealgorithmus zu dem FM-Signal (274) und/oder dem optimalen Empfangssignal (222) verarbeitet wird.

8. Verfahren (100) gemäß einem der Ansprüche 5 bis 7, wobei die Schritte des Verfahrens (100) wiederholt ausgeführt werden, wobei bei einem ersten Ausführen der zweite Signalpfad (110) gewählt wird, wobei der weitere Schritt des Verarbeitens von einem weiteren Schritt des Bestimmens eines Bewertungskriteriums für das FM-Signal (274) gefolgt wird, wobei das Auswahlsignal (244) unter Verwendung des Bewertungskriteriums (278) bestimmt wird.

9. Vorrichtung (220), die ausgebildet ist, um alle Schritte eines Verfahrens (100) gemäß einem der vorangegangenen Ansprüche durchzuführen.

10. Computerprogramm, das dazu eingerichtet ist, alle Schritte eines Verfahrens (100) gemäß einem der Ansprüche 1-8 durchzuführen.

11. Maschinenlesbares Speichermedium mit einem darauf gespeicherten Computerprogramm nach Anspruch 10.

## Claims

1. Method (100) for determining an optimum received signal (222) from a multi-antenna system (224) in the event of FM co-channel reception for a reception frequency, wherein the method (100) has the following steps:
processing (104) a first antenna signal (228, 236) to produce a first FM signal (252) using a first processing rule and processing at least one second antenna signal (232, 240) to produce a second FM signal (256) using a second processing rule;
determining (106) a first rating criterion (260) for the first FM signal (252) and a second rating criterion (264) for the second FM signal (256), wherein the determined rating criterion (260, 264) is a respective piece of RDS information;
selecting (108) one of the FM signals (252, 256) as the optimum received signal (222) for the reception frequency using the first rating criterion (260) and the second rating criterion (264), wherein if only one of the FM signals (252, 256) has a piece of RDS information that corresponds to a piece of desired RDS information, the applicable FM signal (252, 256) is selected as the optimum received signal (222);
redetermining (106) a first rating criterion (260) for the first FM signal (252) and a second rating criterion (264) for the second FM signal (256) if an optimum received signal (222) has not been selected in the preceding step of selection (108), wherein the determined rating criterion (260, 264) is a respective value of a pilot tone frequency deviation;
selecting (108) one of the FM signals (252, 256) as the optimum received signal (222) for the reception frequency using the first rating criterion (260) and the second rating criterion (264), wherein if only one of the FM signals (252, 256) has a value of a pilot tone frequency deviation that corresponds to a desired value for the pilot tone frequency deviation, the applicable FM signal (252, 256) is selected as the optimum received signal (222);
redetermining (106) a first rating criterion (260) for the first FM signal (252) and a second rating criterion (264) for the second FM signal (256) if an optimum received signal (222) has not been selected in the preceding steps of selection (108), wherein the determined rating criterion (260, 264) is a respective piece of quality information for the FM signal;
and
selecting (108) one of the FM signals (252, 256) as the optimum received signal (222) for the reception frequency using the first rating criterion (260) and the second rating criterion (264), wherein the FM signal (252, 256) having the better quality information is selected as the optimum received signal (222).

2. Method (100) according to Claim 1, in which the step (106) of determination involves the determined RDS information being a PI code.

3. Method (100) according to Claim 2, in which the quality information is determined using a counter, wherein the counter is incremented by an increment if the reception quality of the first and/or second antenna signal (228, 232, 236, 240) is above a threshold value, and is decremented by a decrement if the reception quality of the first and/or second antenna signal (228, 232, 236, 240) is below the threshold value.

4. Method (100) according to either of the preceding Claims 2 and 3, in which the step (106) of determination involves a moving average for the value of the pilot tone frequency deviation being determined, wherein a desired value for a pilot tone frequency and/or pilot tone frequency deviation is predetermined if a quality threshold value is exceeded by the quality information, particularly wherein the desired value for the pilot tone frequency and/or pilot tone frequency deviation is adapted using the moving average of the value of the pilot tone frequency deviation.

5. Method (100) according to one of the preceding claims, having a step (112) of changing, in which a selection signal (244) is used between a first signal path (102), which comprises the step (104) of processing, the step (106) of determination and the step (108) of selection, and a second signal path (110), which combines the antenna signals (228, 232, 236, 240) and processes an adaptive multipath algorithm in order to determine the optimum received signal (222) for the reception frequency.

6. Method (100) according to Claim 5, wherein the selection signal (244) used in the step (112) of selection is determined using the first antenna signal (228) and the second antenna signal (232) or signals (236, 240) derived therefrom and/or using a first absolute value of a first pilot tone deviation of the first antenna signal (228) and a second absolute value of a second pilot tone deviation of the second antenna signal (232) and/or using rating criteria (260, 264, 278).

7. Method (100) according to either of Claims 5 and 6, wherein the second signal path (110) comprises at least a step of combination and a further step of processing, wherein the step of combination involves the first antenna signal (228, 236) and the second antenna signal (232, 240) being combined to produce an antenna signal (270) and the further step of processing involves the combined antenna signal (270) being processed using a processing rule and/or the adaptive multipath algorithm to produce the FM signal (274) and/or the optimum received signal (222).

8. Method (100) according to one of Claims 5 to 7, wherein the steps of the method (100) are executed repeatedly, wherein a first execution involves the second signal path (110) being selected, wherein the further step of processing is followed by a further step of determining a rating criterion for the FM signal (274), wherein the selection signal (244) is determined using the rating criterion (278).

9. Apparatus (220) that is configured to perform all the steps of a method (100) according to one of the preceding claims.

10. Computer program that is set up to perform all the steps of a method (100) according to one of Claims 1-8.

11. Machine-readable storage medium having a computer program according to Claim 10 stored thereon.

## Revendications

1. Procédé (100) destiné à déterminer un signal de réception optimal (222) d'un système à antennes multiples (224) lors d'une réception sur des canaux FM identiques pour une fréquence de réception, dans lequel le procédé (100) comporte les étapes consistant à :
traiter (104) un premier signal d'antenne (228, 236) en un premier signal FM (252) par utilisation d'une première instruction de traitement et traiter au moins un deuxième signal d'antenne (232, 240) en un deuxième signal FM (256) par utilisation d'une deuxième instruction de traitement ;
déterminer (106) un premier critère d'évaluation (260) pour le premier signal FM (252) et un deuxième critère d'évaluation (264) pour le deuxième signal FM (256), dans lequel une information RDS est respectivement déterminée sous la forme d'un critère d'évaluation (260, 264) ;
sélectionner (108) l'un des signaux FM (252, 256) en tant que signal de réception optimal (222) pour la fréquence de réception par utilisation du premier critère d'évaluation (260) et du deuxième critère d'évaluation (264), dans lequel, lorsqu'un seul des signaux FM (252, 256) comporte une information RDS correspondant à une information RDS nominale, le signal FM correspondant (252, 256) est sélectionné en tant que signal de réception optimal (222) ;
déterminer à nouveau (106) un premier critère d'évaluation (260) pour le premier signal FM (252) et un deuxième critère d'évaluation (264) pour le deuxième signal FM (256) lorsqu'aucun signal de réception optimal (222) n'a été sélectionné lors de l'étape de sélection précédente (108), dans lequel une valeur d'un écart de fréquence pilote est respectivement déterminée en tant que critère d'évaluation (260, 264) ;
sélectionner (108) l'un des signaux FM (252, 256) en tant que signal de réception optimal (222) pour la fréquence de réception par utilisation du premier critère d'évaluation (260) et du deuxième critère d'évaluation (264), dans lequel, lorsqu'un seul des signaux FM (252, 256) présente une valeur d'un écart de fréquence pilote qui correspond à une valeur nominale pour l'écart de fréquence pilote, le signal FM correspondant (252, 256) est sélectionné en tant que signal de réception optimal (222) ;
déterminer à nouveau (106) un premier critère d'évaluation (260) pour le premier signal FM (252) et un deuxième critère d'évaluation (264) pour le deuxième signal FM (256) lorsqu'aucun signal de réception optimal (222) n'a été sélectionné lors des étapes de sélection précédentes (108), dans lequel une information de qualité du signal FM est respectivement déterminée sous la forme d'un critère d'évaluation (260, 264) ;
sélectionner (108) l'un des signaux FM (252, 256) en tant que signal de réception optimal (222) pour la fréquence de réception par utilisation du premier critère d'évaluation (260) et du deuxième critère d'évaluation (264), dans lequel le signal FM (252, 256) présentant la meilleure information de qualité est sélectionné en tant que signal de réception optimal (222).

2. Procédé (100) selon la revendication 1, dans lequel, lors de l'étape de détermination (106), un code PI est déterminé en tant qu'informations RDS.

3. Procédé (100) selon la revendication 2, dans lequel l'information de qualité est déterminée par utilisation d'un compteur, dans lequel le compteur est incrémenté d'une valeur d'incrémentation lorsque la qualité de réception du premier et/ou du deuxième signal d'antenne (228, 232, 236, 240) est supérieure à une valeur de seuil, et est décrémenté d'une valeur de décrémentation lorsque la qualité de réception du premier et/ou du deuxième signal d'antenne (228, 232, 236, 240) est inférieure à la valeur de seuil.

4. Procédé (100) selon l'une quelconque des revendications 2 à 3 précédentes, dans lequel, lors de l'étape de détermination (106), une moyenne glissante de la valeur de l'écart de fréquence pilote est déterminée, dans lequel, lors du dépassement d'un seuil de qualité par l'information de qualité, une valeur nominale pour une fréquence pilote et/ou l'écart de fréquence pilote est à nouveau déterminée, notamment dans lequel la valeur nominale pour la fréquence pilote et/ou l'écart de fréquence pilote est adaptée par utilisation de la moyenne glissante de la valeur de l'écart de fréquence pilote.

5. Procédé (100) selon l'une quelconque des revendications précédentes, comportant une étape (112) de basculement lors duquel par utilisation d'un signal de sélection (244) entre un premier trajet de signal (102) comprenant l'étape (104) de traitement, l'étape (106) de détermination et l'étape (108) de sélection, et un deuxième trajet de signal (110) qui détermine le signal de réception optimal (222) pour la fréquence de réception par combinaison des signaux d'antenne (228, 232, 236, 240) et traitement d'un algorithme de trajets multiples adaptatif.

6. Procédé (100) selon la revendication 5, dans lequel le signal de sélection (244) utilisé lors de l'étape de sélection (112) est déterminé par utilisation du premier signal d'antenne (228) et du deuxième signal d'antenne (232) ou de signaux (236, 240) dérivés de ceux-ci et/ou par utilisation d'une première valeur d'un premier écart de tonalité pilote du premier signal d'antenne (228) et d'une deuxième valeur d'un deuxième écart de tonalité pilote du deuxième signal d'antenne (232) et/ou par utilisation de critères d'évaluation (260, 264, 278).

7. Procédé (100) selon l'une quelconque des revendications 5 à 6, dans lequel le deuxième trajet de signal (110) comprend au moins une étape de combinaison et une autre étape de traitement, dans lequel, lors de l'étape de combinaison, le premier signal d'antenne (228, 236) et le deuxième signal d'antenne (232, 240) sont combinés en un signal d'antenne (270) et lors de l'autre étape de traitement, le signal d'antenne combiné (270) est traité en le signal FM (274) et/ou en le signal de réception optimal (222) par utilisation d'une instruction de traitement et/ou de l'algorithme de trajets multiples adaptatif.

8. Procédé (100) selon l'une quelconque des revendications 5 à 7, dans lequel les étapes du procédé (100) sont exécutées de manière répétée, dans lequel, lors d'une première exécution, le deuxième trajet de signal (110) est sélectionné, dans lequel l'autre étape de traitement est suivie d'une autre étape de détermination d'un critère d'évaluation pour le signal FM (274), dans lequel le signal de sélection (244) est déterminé par utilisation du critère d'évaluation (278).

9. Dispositif (220) conçu pour mettre en oeuvre toutes les étapes d'un procédé (100) selon l'une quelconque des revendications précédentes.

10. Programme d'ordinateur conçu pour mettre en oeuvre toutes les étapes d'un procédé (100) selon l'une quelconque des revendications 1 à 8.

11. Support de mémoire lisible par machine comportant un programme d'ordinateur selon la revendication 10 stocké sur celui-ci.
